(19) **Europäisches Patentamt / European Patent Office / Office européen des brevets**

(11) **EP 3 124 981 B1**

(12) **FASCICULE DE BREVET EUROPEEN**

(45) Date de publication et mention de la délivrance du brevet:
**25.08.2021  Bulletin 2021/34**

(21) Numéro de dépôt: **16178270.1**

(22) Date de dépôt: **06.07.2016**

(51) Int Cl.:
*G01P 3/56* *(2006.01)*  *G01P 3/488* *(2006.01)*
*G01P 3/46* *(2006.01)*  *G01P 3/48* *(2006.01)*
*G01D 5/14* *(2006.01)*  *G01D 5/20* *(2006.01)*
*B64C 25/40* *(2006.01)*  *G01D 5/12* *(2006.01)*
*H02P 27/06* *(2006.01)*

(54) **DISPOSITIF DE MESURE D'UNE VITESSE RELATIVE ET/OU D'UNE POSITION ANGULAIRE RELATIVE ENTRE DEUX ELEMENTS TOURNANTS**

VORRICHTUNG ZUM MESSEN DER RELATIVEN GESCHWINDIGKEIT UND/ODER DER RELATIVEN WINKELPOSITION ZWISCHEN ZWEI SICH DREHENDEN ELEMENTEN

DEVICE FOR MEASURING A RELATIVE SPEED AND/OR A RELATIVE ANGULAR POSITION BETWEEN TWO ROTATING ELEMENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **10.07.2015   FR 1556634**

(43) Date de publication de la demande:
**01.02.2017   Bulletin 2017/05**

(73) Titulaire: **Safran Landing Systems**
**78140 Vélizy-Villacoublay (FR)**

(72) Inventeurs:
• **LEYNAERT, François-Noël**
**95160 MONTMORENCY (FR)**
• **QUENERCH'DU, Marc**
**78140 VELIZY-VILLACOUBLAY (FR)**
• **DURAND, Guillaume**
**78140 VELIZY-VILLACOUBLAY (FR)**

(74) Mandataire: **Lavaud, Thomas**
**Cabinet Boettcher**
**16, rue Médéric**
**75017 Paris (FR)**

(56) Documents cités:
**DE-B- 1 167 072      GB-A- 817 669**
**JP-A- S59 154 319    US-A- 2 481 196**
**US-A- 4 928 046**

• **None**

EP 3 124 981 B1

**Description**

L'invention concerne un dispositif de mesure d'une vitesse relative de rotation et/ou d'une position angulaire relative entre un premier élément tournant et un deuxième élément tournant montés tournants par rapport à une partie statique.

ARRIERE PLAN DE L'INVENTION

De nombreux systèmes requièrent, pour fonctionner efficacement, de connaître avec précision la différence de vitesse de rotation entre les vitesses de rotation de deux éléments tournants (roues, disques, etc.).

Ainsi, dans un système d'entraînement d'une roue d'aéronef dans lequel la roue est entraînée en rotation par un moteur électrique d'entraînement, on asservit la vitesse du moteur à la vitesse de rotation de la roue avant d'accoupler un arbre de sortie du moteur à la roue. Il est donc nécessaire de connaître la différence de vitesse entre la vitesse de rotation du moteur et la vitesse de rotation de la roue.

Généralement, on munit chacun des deux éléments tournants d'un capteur de vitesse absolue qui mesure la vitesse de chaque élément tournant par rapport à un même référentiel fixe, puis on calcule la différence entre la vitesse de chaque élément tournant.

On obtient ainsi une mesure de différence de vitesse de rotation soumise aux imprécisions ajoutées de chaque capteur de vitesse absolue et qui dépend de la dérive de chaque capteur de vitesse absolue.

Un problème similaire se pose pour la mesure de position angulaire relative entre deux éléments tournants.

Le document DE 11 67 072 B dévoile un dispositif de mesure de l'art antérieur.

Le document US 4 928 046 A dévoile un dispositif de mesure de l'art antérieur, qui est adapté à déterminer une position angulaire relative entre deux éléments tournants avec un résolveur.

OBJET DE L'INVENTION

L'invention a pour objet de fournir un dispositif de mesure de vitesse et/ou de position angulaire adapté à mesurer une différence de vitesse de rotation et/ou une différence de position angulaire entre deux éléments tournants qui ne présente pas les inconvénients précités.

RESUME DE L'INVENTION

En vue de la réalisation de ce but, on propose un dispositif de mesure conforme à la revendication 1.

La vitesse relative de rotation et/ou la position angulaire relative entre le premier élément tournant et le deuxième élément tournant est donc obtenue à partir du signal de mesure produit par le capteur.

On obtient ainsi une mesure de vitesse relative dont la source d'imprécision provient d'un capteur unique, et qui est donc à la fois précise et stable.

BREVE DESCRIPTION DES DESSINS

L'invention sera mieux comprise à la lumière de la description qui suit en référence aux figures des dessins annexés parmi lesquelles :

- la figure 1 représente un dispositif de mesure selon un premier mode de réalisation ;
- la figure 2 représente un dispositif de mesure de l'invention selon un deuxième mode de réalisation ;
- la figure 3 représente un système d'entraînement en rotation d'une roue d'aéronef dans lequel est intégré un dispositif de mesure de l'invention selon un troisième mode de réalisation ;
- la figure 4 représente un système d'entraînement en rotation d'une roue d'aéronef dans lequel est intégré un dispositif de mesure selon un quatrième mode de réalisation ;
- la figure 5 représente un système d'entraînement en rotation d'une roue d'aéronef dans lequel est intégré un dispositif de mesure selon un cinquième mode de réalisation.

DESCRIPTION DETAILLEE DE L'INVENTION

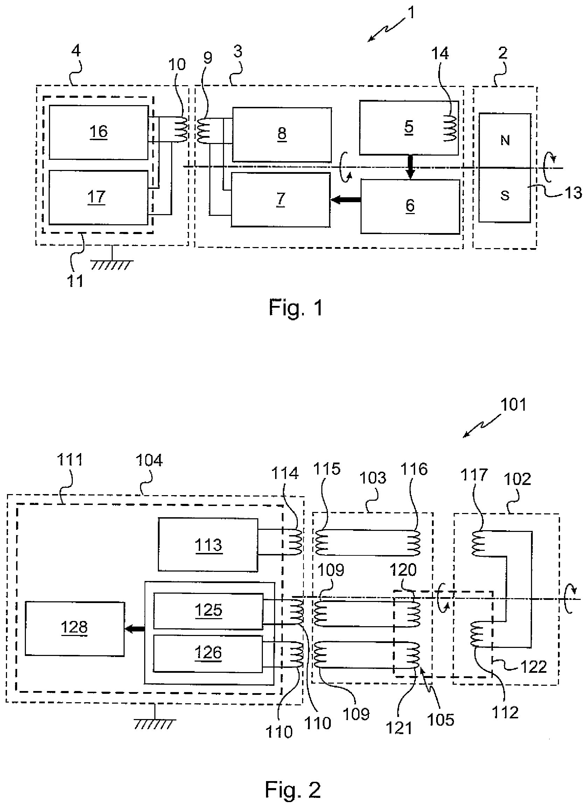

En référence à la figure 1, un dispositif de mesure 1 selon un premier mode de réalisation (qui n'appartient pas à l'invention) est destiné à mesurer une vitesse relative entre un premier élément tournant 2 et un deuxième élément tournant 3 montés tournants par rapport à une partie statique 4.

Le premier élément tournant 2 et le deuxième élément tournant 3 sont ici deux disques disposés concentriquement, alors que la partie statique 4 est située à proximité et en regard du deuxième élément tournant 3.

Le dispositif de mesure 1 comporte tout d'abord des moyens de génération d'un champ magnétique tournant. Les moyens de génération du champ magnétique tournant comportent un aimant permanent 13 comprenant un pôle Nord et un pôle Sud. L'aimant permanent 13 est fixé au premier élément tournant 2.

Le dispositif de mesure 1 comporte de plus un capteur 5, une unité de mesure 6, des moyens de modulation 7, une première unité d'alimentation 8 et un premier enroulement 9 qui sont montés sur le deuxième élément tournant 3. Le capteur 5 comporte un enroulement de mesure 14 disposé au regard de l'aimant permanent 13, de sorte que le capteur 5 est sensible au champ magnétique généré par l'aimant permanent 13.

Le dispositif de mesure 1 comporte enfin un deuxième enroulement 10 et des moyens de traitement 11 qui sont positionnés sur la partie statique 4.

Le premier enroulement 9 et le deuxième enroulement 10 sont positionnés en regard l'un de l'autre et concentriquement. Un couplage magnétique est ainsi établi entre le premier enroulement 9 et le deuxième enroulement 10.

Les moyens de traitement 11 comportent une deuxième unité d'alimentation 16 et des moyens de démodulation 17. Les moyens de traitement 11 sont connectés électriquement au deuxième enroulement 10.

Lorsque le premier élément tournant 2 tourne, l'aimant permanent 13 génère un champ magnétique tournant à une vitesse de rotation magnétique représentative d'une vitesse de rotation du premier élément tournant 2, en l'occurrence égale à la vitesse de rotation du premier élément tournant 2. Le champ magnétique tournant induit un courant électrique dans l'enroulement de mesure 14 du capteur 5. La fréquence du courant électrique induit est proportionnelle à la vitesse relative entre le premier élément tournant 2 et le deuxième élément tournant 3.

L'unité de mesure 6 acquiert alors des valeurs de la fréquence et éventuellement d'autres paramètres du courant électrique induit (amplitude, phase, etc.).

L'unité de mesure 6 produit à partir de la fréquence du courant électrique induit un signal de mesure représentatif de la vitesse relative entre le premier élément tournant 2 et le deuxième élément tournant 3. On note que la fréquence et les autres paramètres peuvent aussi être utilisés pour déterminer la position angulaire relative du premier élément tournant 2 par rapport au deuxième élément tournant 3.

Les moyens de modulation 7 modulent alors un courant d'alimentation circulant dans le premier enroulement 9 et généré par la deuxième unité d'alimentation 16 des moyens de traitement 11 via le deuxième enroulement 10.

Le courant d'alimentation est par ailleurs utilisé par la première unité d'alimentation 8 pour alimenter électriquement le capteur de courant 5, l'unité de mesure 6 et les moyens de modulation 7.

La modulation du courant d'alimentation est perceptible au niveau des moyens de traitement 11 du fait du couplage magnétique créé par le premier enroulement 9 et le deuxième enroulement 10.

Les moyens de démodulation 17 acquièrent ainsi une image du signal de mesure représentatif de la vitesse relative entre le premier élément tournant 2 et le deuxième élément tournant 3.

En référence à la figure 2, le dispositif de mesure 101 selon un deuxième mode de réalisation (qui appartient à l'invention) est destiné à mesurer une vitesse relative entre un premier élément tournant 102 et un deuxième élément tournant 103 montés tournants par rapport à une partie statique 104.

Le premier élément tournant 101 et le deuxième élément tournant 103 sont ici deux disques disposés concentriquement, alors que la partie statique 101 est située à proximité et en regard du deuxième élément tournant 103.

Le dispositif de mesure 101 comporte des moyens de génération d'un champ magnétique tournant, un capteur 105, deux premiers enroulements 109, deux deuxièmes enroulements 110 et des moyens de traitement 111.

Les moyens de génération du champ magnétique tournant comportent un rotor 112 monté sur le premier élément tournant 102, des moyens d'excitation 113 intégrés aux moyens de traitement 111, ainsi qu'un troisième enroulement 114, un quatrième enroulement 115, un cinquième enroulement 116 et un sixième enroulement 117.

Le troisième enroulement 114 est situé sur la partie statique 104, le quatrième enroulement 115 et le cinquième enroulement 116 sont situés sur le deuxième élément tournant 103. Le sixième enroulement 117 est situé sur le premier élément tournant 102. Le troisième enroulement 114 et le quatrième enroulement 115 sont positionnés concentriquement et en regard l'un de l'autre. Un couplage magnétique est ainsi établi entre le troisième enroulement 114 et le quatrième enroulement 115. Le cinquième enroulement 116 est connecté au quatrième enroulement 115. Un couplage magnétique est établi le cinquième enroulement 116 et le sixième enroulement 117. Le sixième enroulement 117 est connecté au rotor 112.

Le capteur 105 comporte un premier stator 120 et un deuxième stator 121 qui sont montés sur le deuxième élément tournant 103.

Le rotor 112, le premier stator 120 et le deuxième stator 121 constituent un résolveur 122.

Les deux premiers enroulements 109 sont situés sur le deuxième élément tournant 103, alors que les deux deuxièmes enroulements 110 sont situés sur la partie statique 104. Chaque premier enroulement 109 est positionné concentriquement et en regard d'un deuxième enroulement 110. Un couplage magnétique est ainsi établi entre chaque premier enroulement 109 et le deuxième enroulement 110 associé.

Les moyens de traitement 111 sont situés sur la partie statique 104. Outre les moyens d'excitation 113, ils comportent des moyens de démodulation sinus 125, des moyens de démodulation cosinus 126, et une unité de mesure 128.

Les moyens d'excitation 113 fournissent un courant d'excitation au rotor 112 du résolveur 122 via le troisième enroulement 114, le quatrième enroulement 115, le cinquième enroulement 116 et le sixième enroulement 117.

Un champ magnétique est ainsi généré au niveau du rotor 112 du résolveur 122. Le champ magnétique généré tourne à une vitesse de rotation magnétique égale à la vitesse de rotation du premier élément tournant 102.

Le champ magnétique généré induit des courants électriques induits déphasés dans le premier stator 120 et dans le deuxième stator 121. Les courants électriques induits déphasés sont représentatifs de la vitesse relative entre le premier élément tournant 102 et le deuxième élément tournant 103.

Les courants électriques induits circulent aussi dans les premiers enroulements 109. Grâce au couplage magnétique entre les premiers enroulements 109 et les deuxièmes enroulements 110, des courants électriques de mesure sont induits dans les deuxièmes enroulements 110 et acquis par les moyens de démodulation sinus 125 et par les moyens de démodulation cosinus 126.

Les moyens de démodulation sinus 125 et les moyens de démodulation cosinus 126 extraient la phase, la fréquence et l'amplitude des courants électrique de mesure, et l'unité de mesure 128 produit à partir de ces paramètres une mesure de vitesse relative de rotation entre le premier élément tournant 102 et le deuxième élément tournant 103, ainsi que la position angulaire relative entre le premier élément tournant 102 et le deuxième élément tournant 103.

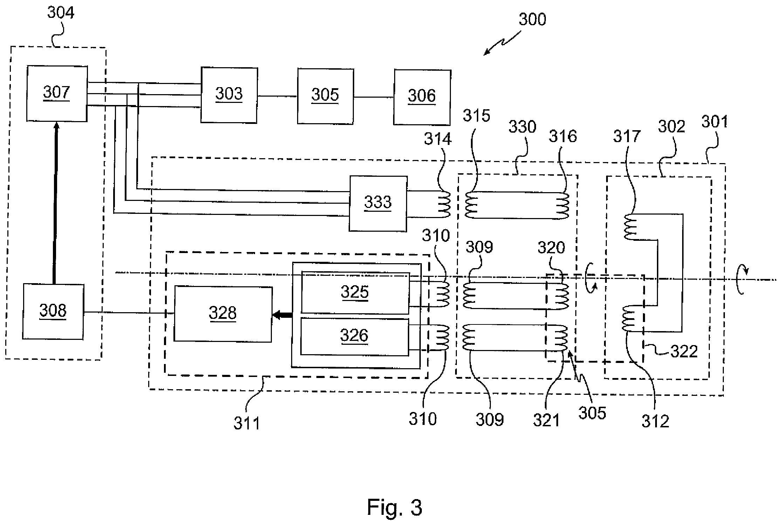

En référence à la figure 3, on décrit cette fois un système d'entraînement en rotation 300 d'une roue d'aéronef 302 dans lequel est intégré un dispositif de mesure 301 selon un troisième mode de réalisation (qui appartient à l'invention).

Le système d'entraînement 300 comporte un moteur électrique d'entraînement 303, des moyens de pilotage 304 pour piloter le moteur électrique d'entraînement 303, un réducteur 305, un dispositif d'embrayage 306 et le dispositif de mesure 301.

On note que l'arbre de sortie du moteur 303 et la roue 302 ne sont pas disposées concentriquement.

Les moyens de pilotage du moteur électrique d'entraînement 303 comportent un onduleur 307 et des moyens de régulation 308. L'onduleur 307 fournit des tensions de phase à des phases du moteur 303. Les moyens de régulation 308 sont utilisés pour asservir la vitesse de rotation du moteur 303 à la vitesse de rotation de la roue 302 préalablement à un accouplement de l'arbre de sortie du moteur 303 et de la roue. La vitesse de rotation du moteur 303 et la vitesse de rotation de la roue 302 doivent en effet être sensiblement égales au moment de l'accouplement.

Le réducteur 305 est relié à l'arbre de sortie du moteur 303.

Le dispositif d'embrayage 306 est quant à lui relié au réducteur 305 (et donc à l'arbre de sortie) et est commandé pour accoupler sélectivement l'arbre de sortie du moteur 303 et la roue 302.

Le dispositif de mesure est destiné à mesurer une vitesse relative entre l'arbre de sortie du moteur 303 et la roue 302.

Le dispositif de mesure 301 comporte des moyens de génération d'un champ magnétique tournant, un capteur 305, deux premiers enroulements 309, deux deuxièmes enroulements 310 et des moyens de traitement 311.

Les moyens de génération d'un champ magnétique tournant comprennent un rotor auxiliaire 330 disposé concentriquement à la roue 302 entre la partie statique et la roue 302.

Outre le rotor auxiliaire 330, les moyens de génération du champ magnétique tournant comportent une unité d'entraînement auxiliaire 333, un rotor 312 monté sur la roue 302, un troisième enroulement 314, un quatrième enroulement 315, un cinquième enroulement 316 et un sixième enroulement 317.

L'unité de traitement auxiliaire 333 est reliée à l'onduleur 307.

Le troisième enroulement 314 est situé sur la partie statique, le quatrième enroulement 315 et le cinquième enroulement 316 sont situés sur le rotor auxiliaire 330. Le sixième enroulement 317 est situé sur la roue 302.

Le troisième enroulement 314 et le quatrième enroulement 315 sont positionnés concentriquement et en regard l'un de l'autre. Un couplage magnétique est ainsi établi entre le troisième enroulement 314 et le quatrième enroulement 315. Le cinquième enroulement 316 est connecté au quatrième enroulement 315. Un couplage magnétique est établi entre le cinquième enroulement 316 et le sixième enroulement 317. Le sixième enroulement 317 est connecté au rotor 312.

Le capteur 305 comporte un premier stator 320 et un deuxième stator 321 qui sont montés sur le rotor auxiliaire 330.

Le rotor 312, le premier stator 320 et le deuxième stator 321 constituent un résolveur 322.

Les deux premiers enroulements 309 sont situés sur le rotor auxiliaire 330, alors que les deux deuxièmes enroulements 310 sont situés sur la partie statique. Chaque premier enroulement 309 est positionné concentriquement et en regard d'un deuxième enroulement 310. Un couplage magnétique est ainsi établi entre chaque premier enroulement 309 et le deuxième enroulement 310 associé.

Les moyens de traitement 311 sont situés sur la partie statique. Ils comportent des moyens de démodulation sinus 325, des moyens de démodulation cosinus 326, et une unité de mesure 328.

L'onduleur 307, qui fournit des tensions de phase aux phases du moteur 303, fournit aussi les tensions de phase à l'unité d'entraînement auxiliaire 333.

L'unité d'entraînement auxiliaire 333 entraîne en rotation le rotor auxiliaire 330 via le troisième enroulement 314 et le quatrième enroulement 315 à la vitesse de rotation du moteur 303 en utilisant les tensions de phase.

Un courant d'excitation est ainsi transmis au rotor 312 du résolveur 322 via le troisième enroulement 314, le quatrième enroulement 315, le cinquième enroulement 316 et le sixième enroulement 317.

Un champ magnétique est ainsi généré au niveau du rotor 312 du résolveur 322. Le champ magnétique généré tourne à une vitesse de rotation magnétique égale à la vitesse de rotation de la roue 302.

Le champ magnétique généré induit des courants électriques induits déphasés dans le premier stator 320 et dans le deuxième stator 321. Les courants électriques induits déphasés sont représentatifs de la vitesse relative entre le moteur 303 et la roue 302.

Les courants électriques induits circulent aussi dans les premiers enroulements 309. Grâce au couplage magnétique entre les premiers enroulements 309 et les deuxièmes enroulements 310, des courants électriques de mesure sont induits dans les deuxièmes enroulements 310 et acquis par les moyens de démodulation sinus 325 et par les moyens de démodulation cosinus 326.

Les moyens de démodulation sinus 325 et les moyens de démodulation cosinus 326 extraient la phase, la fréquence et l'amplitude des courants électrique de mesure, et l'unité de mesure 328 produit à partir de ces paramètres une mesure de vitesse relative de rotation entre le moteur 303 et la roue 302.

L'unité de mesure 328 transmet la mesure de vitesse relative aux moyens de régulation 308. Les moyens de régulation 308 commandent alors l'onduleur 307 en fonction des mesures de la vitesse relative entre le moteur 303 et la roue 302 et asservit ainsi la vitesse du moteur 303 à la vitesse de la roue 302 avant d'accoupler l'arbre de sortie du moteur 303 et la roue 302.

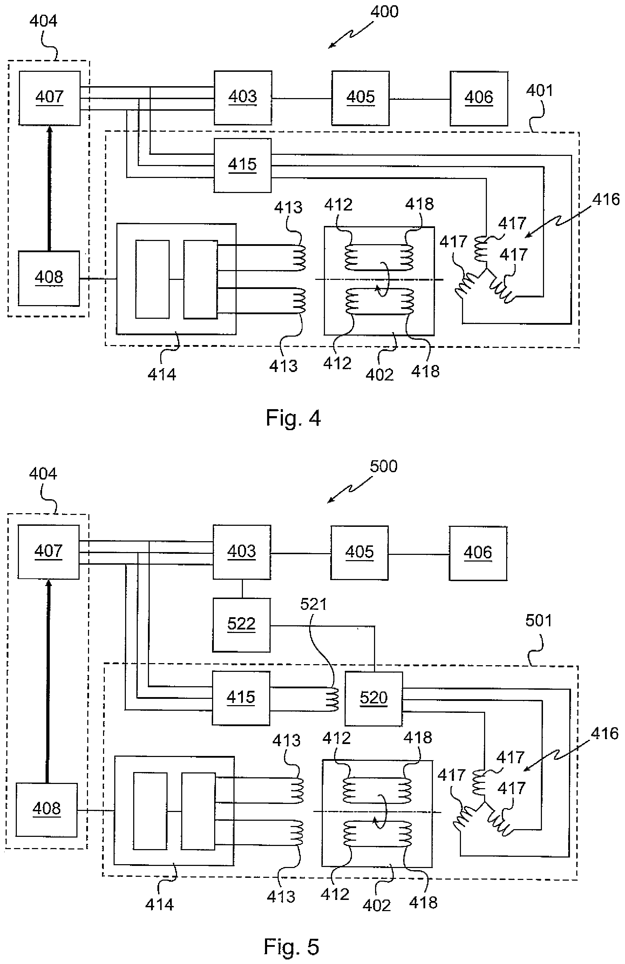

En référence à la figure 4, on décrit cette fois un système d'entraînement en rotation 400 d'une roue d'aéronef 402 dans lequel est intégré un dispositif de mesure 401 selon un quatrième mode de réalisation (qui ne fait pas partie de l'invention).

Le système d'entraînement 400 comporte un moteur électrique d'entraînement 403, des moyens de pilotage 404 pour piloter le moteur 403, un réducteur 405, un dispositif d'embrayage 406, et le dispositif de mesure 401.

On note que l'arbre de sortie du moteur 403 et la roue 402 ne sont pas disposées concentriquement.

Les moyens de pilotage 404 du moteur électrique d'entraînement 403 comportent un onduleur 407 et des moyens de régulation 408. L'onduleur 407 fournit des tensions de phase à des phases du moteur 403. Les moyens de régulation 408 sont utilisés pour asservir la vitesse de rotation du moteur 403 à la vitesse de rotation de la roue 402. La vitesse de rotation du moteur 403 et la vitesse de rotation de la roue 402 doivent en effet être sensiblement égales au moment de l'accouplement.

Le réducteur 405 est relié à l'arbre de sortie du moteur 403.

Le dispositif d'embrayage 406 est quant à lui relié au réducteur 405 (et donc à l'arbre de sortie) et est commandé pour accoupler sélectivement l'arbre de sortie du moteur 403 et la roue 402.

Le dispositif de mesure 401 est destiné à mesurer une vitesse relative entre un arbre de sortie du moteur 403 et la roue 402.

Le dispositif de mesure 401 comporte des moyens de génération d'un champ magnétique tournant, un capteur, deux premier enroulement 412, deux deuxièmes enroulements 413 et des moyens de traitement 414.

Les moyens de génération d'un champ magnétique tournant comportent une unité de modulation haute fréquence 415, et une partie stator auxiliaire 416 comportant trois enroulements stators 417.

Le capteur comporte deux troisièmes enroulements 418 situés sur la roue 402. Chaque troisième enroulement 418 est positionné en regard de la partie stator auxiliaire 416, de sorte qu'un couplage magnétique est établi entre chaque troisième enroulement 418 et la partie stator auxiliaire 416.

Les deux premiers enroulements 412 sont situés sur la roue 402, alors que les deux deuxièmes enroulements 413 sont situés sur une partie statique. Chaque premier enroulement 412 est positionné concentriquement et en regard d'un deuxième enroulement 413. Un couplage magnétique est ainsi établi entre chaque premier enroulement 412 et le deuxième enroulement 413 associé. Chaque premier enroulement 412 est connecté à l'un des troisièmes enroulements 418.

L'unité de modulation haute fréquence 415 est reliée à l'onduleur 407. L'unité de modulation haute fréquence 415 excite les enroulements stators 417 de la partie stator auxiliaire 416 avec les tensions de phase que fournit l'onduleur 407 au moteur 403. La partie stator auxiliaire 416 génère ainsi un champ magnétique dont la direction tourne magnétiquement à une vitesse magnétique représentative d'une vitesse de rotation de l'arbre de sortie du moteur 403. Ainsi, ici, le champ magnétique ne tourne pas mécaniquement grâce à un rotor, mais magnétiquement via à une rotation de la direction du champ provoquée par les tensions de phase fournies à la partie stator auxiliaire 416.

Les troisièmes enroulements 418 sont sensibles à ce champ magnétique, et un courant électrique induit est produit qui est représentatif du champ magnétique.

Grâce au couplage magnétique entre les premiers enroulements 412 et les deuxièmes enroulements 413, un courant électrique de mesure est reçu par les moyens de traitement.

Les moyens de traitement 414 acquièrent ainsi des mesures de la vitesse relative entre le moteur 403 et la roue 402 et transmettent aux moyens de régulation 408 ces mesures. Les moyens de régulation 408 commandent alors l'onduleur 407 en fonction des mesures de la vitesse relative entre le moteur 403 et la roue 402 et asservit ainsi la vitesse du moteur 403 à la vitesse de la roue 402 avant d'accoupler l'arbre de sortie du moteur 403 et la roue 402.

En référence à la figure 5, on décrit cette fois un système d'entraînement en rotation 500 d'une roue d'aéronef dans lequel est intégré un dispositif de mesure 501 selon un cinquième mode de réalisation (qui ne fait pas partie de l'invention).

Le système d'entraînement 500 et le dispositif de mesure 501 sont très proches du système d'entraînement 400 et du dispositif de mesure 501, à quelques exceptions près. On conserve donc, sur la figure 5, les références des éléments identiques de la figure 4.

Un deuxième résolveur 520 est couplé magnétiquement à l'unité de modulation haute fréquence via un enroulement auxiliaire 521. Un réducteur auxiliaire 522 est par ailleurs disposé entre le moteur 403 et le deuxième résolveur 520.

Le deuxième résolveur 520 est soit un résolveur déjà monté sur le moteur 403 soit un résolveur additionnel. L'utilisation du deuxième résolveur 520 améliore la similarité entre la vitesse magnétique du champ magnétique tournant généré via la partie stator auxiliaire et la vitesse de rotation du moteur 403.

Le nombre de pôle du deuxième résolveur 520 doit être corrélé avec le rapport de réduction du système d'entraînement 500.

Si la roue tourne à la vitesse Wroue, le moteur d'entraînement 403 doit tourner à la vitesse :

$$\text{Wmot = Wroue x R2 x R1 (Wmot et Wroue sont en tour/sec),}$$

où R1 est le rapport de réduction du réducteur et R2 est le rapport de réduction entre le dispositif d'embrayage et la roue.

Si le moteur possède n paires de pôles, la fréquence des tensions de phase en sortie de l'onduleur est :

$$\text{fresolver = n x Wmot.}$$

Si le deuxième résolveur 520 a le même nombre de paires de pôles que le moteur, la fréquence du deuxième résolveur est :

$$\text{fresolver = n x Wmot.}$$

Si le deuxième résolveur 520 possède un nombre de paires de pôles différent n1, la fréquence du deuxième résolveur est :

$$\text{fresolver = n1 x Wmot.}$$

On peut assimiler la partie stator auxiliaire 416 et les troisièmes enroulements à un résolveur de roue qui aurait une fréquence froue :

frou = Wroue pour un résolveur simple (bipo-laire),

où froue = n2 x Wroue pour un résolveur multipo-laire à n2 paires de pôles.

La synchronisation de vitesse est obtenue lorsque :

$$\text{n1 x Wmot = n2 x Wroue,}$$

soit lorsque :

$$n2 = n1 \times R1 \times R2.$$

A titre d'exemple, lorsque où Wmot = 8000tr/min et Wroue = 200 tr/min, soit R1 x R2 = 40, et avec n1 = n = 2, on obtient n2 = 80, ce qui est très important et complexe à réaliser.

Le réducteur auxiliaire 522, de rapport de réduction R2 x R1, permet justement de réduire le nombre de paires de pôles n2 et d'assurer la synchronisation de vitesse.

L'invention n'est pas limitée aux modes de réalisation particuliers qui viennent d'être décrits, mais, bien au contraire, couvre toute variante entrant dans le cadre de l'invention tel que défini par les revendications.

Ainsi, dans le premier mode de réalisation du dispositif de mesure, on peut parfaitement, à la place de l'aimant permanent, utiliser une bobine parcourue par un courant d'excitation pour générer le champ magnétique.

Les moyens de transmission entre la partie statique et le deuxième élément tournant (ici, la roue) comportent des enroulements situés sur la partie statique et des enroulements situés sur le deuxième élément tournant, lesdits enroulements étant disposés concentriquement. Ces enroulements constituent un transformateur tournant. On note qu'il est possible dans une réalisation qui n'appartient pas à l'invention d'utiliser des moyens de transmission différents : moyens optiques, etc.

**Revendications**

1. Dispositif de mesure d'une vitesse relative de rotation et/ou d'une position angulaire relative entre un premier élément tournant (102) et un deuxième élément tournant (103) montés tournants par rapport à une partie statique, le dispositif comportant :

   - des moyens de génération d'un champ magnétique tournant à une vitesse de rotation magnétique représentative d'une vitesse de rotation du premier élément tournant ;
   - un capteur (105) monté tournant à la vitesse de rotation du premier élément tournant ou à une vitesse de rotation du deuxième élément tournant et sensible au champ magnétique tournant, le capteur étant adapté à produire à partir du champ magnétique tournant un signal de mesure représentatif de la vitesse relative de rotation et/ou de la position angulaire relative ;
   - des moyens de traitement (111) positionnés sur la partie statique et destinés à acquérir le signal de mesure ;
   - des premiers moyens de transmission adaptés à transmettre le signal de mesure aux moyens de traitement depuis le capteur, les premiers moyens de transmission comprenant deux transformateurs tournants (109, 110), les moyens de génération comportant un rotor (112) comprenant un unique enroulement monté sur le premier élément tournant, le capteur comportant un stator (120, 121) comprenant deux enroulements montés sur le deuxième élément tournant, le rotor et le stator formant un résolveur (122),

   le champ magnétique généré induisant des courants électriques induits déphasés dans les enroulements du stator, les courants électriques induits déphasés étant représentatifs de la vitesse relative entre le premier élément tournant (102) et le deuxième élément tournant (103), les courants électriques induits déphasés induisant eux-mêmes des courants électriques de mesure qui sont acquis par les moyens de traitement via les deux transformateurs tournants.

2. Dispositif de mesure selon la revendication 1, dans lequel le capteur est monté sur le deuxième élément tournant.

3. Dispositif de mesure selon la revendication 1, dans lequel les moyens de génération comportent une bobine positionnée directement sur le premier élément tournant pour influencer le capteur.

4. Dispositif de mesure selon la revendication 1, dans lequel le rotor du résolveur reçoit un courant d'excitation transmis par les moyens de traitement via des deuxièmes moyens de transmission.

5. Dispositif de mesure selon la revendication 1, dans lequel les moyens de génération comportent des moyens d'excitation et un rotor auxiliaire (330).

6. Dispositif de mesure selon la revendication 5, dans lequel le capteur est monté sur le rotor auxiliaire.

7. Dispositif de mesure selon l'une des revendications précédentes, dans lequel les premiers moyens de transmission ou les deuxièmes moyens de transmission comportent un transformateur tournant.

8. Système d'entraînement en rotation d'une roue d'aéronef, le système comprenant un moteur électrique d'entraînement (303) destiné à entraîner la roue en rotation, des moyens de pilotage comportant un onduleur pour piloter le moteur électrique d'entraînement et un dispositif de mesure selon l'une des revendications précédentes destiné à mesurer une vitesse relative de rotation et/ou une position angulaire relative entre un arbre de sortie du moteur et la roue.

**Patentansprüche**

1. Vorrichtung zum Messen einer relativen Drehgeschwindigkeit und/oder einer relativen Winkelposition zwischen einem ersten Drehelement (102) und einem zweiten Drehelement (103), die in Bezug auf einen statischen Teil drehbar gelagert sind, wobei die Vorrichtung umfasst:

  - Erzeugungsmittel zur Erzeugung eines Magnetfelds, das sich mit einer magnetischen Drehgeschwindigkeit dreht, die repräsentativ für eine Drehgeschwindigkeit des ersten Drehelements ist;
  - einen Sensor (105), der sich mit der Drehgeschwindigkeit des ersten Drehelements oder einer Drehgeschwindigkeit des zweiten Drehelements drehend gelagert und empfindlich gegenüber dem sich drehenden Magnetfeld ist, wobei der Sensor angepasst ist, anhand des sich drehenden Magnetfeldes ein Messsignal zu erzeugen, das repräsentativ für die relative Drehgeschwindigkeit und/oder die relative Winkelposition ist;
  - Verarbeitungsmittel (111), die an dem statischen Teil positioniert und dazu bestimmt sind, das Messsignal zu erfassen;
  - erste Übertragungsmittel, die angepasst sind, das Messsignal an die Verarbeitungsmittel von dem Sensor zu übertragen, wobei die ersten Übertragungsmittel zwei Drehtransformatoren (109, 110) umfassen, wobei die Erzeugungsmittel einen Rotor (112) umfassen, der eine einzige Wicklung umfasst, die an dem ersten Drehelement montiert ist, wobei der Sensor einen Stator (120, 121) umfasst, der zwei Wicklungen umfasst, die an dem zweiten Drehelement montiert sind, wobei der Rotor und der Stator einen Resolver (122) bilden,

  wobei das erzeugte Magnetfeld induzierte phasenverschobene elektrische Ströme in den Wicklungen des Stators induziert, wobei die induzierten phasenverschobenen elektrischen Ströme repräsentativ für die relative Geschwindigkeit zwischen dem ersten Drehelement (102) und dem zweiten Drehelement (103) sind, wobei die induzierten phasenverschobenen elektrischen Ströme selbst elektrische Messströme induzieren, die von den Verarbeitungsmitteln über die beiden Drehtransformatoren erfasst werden.

2. Vorrichtung zum Messen nach Anspruch 1, bei der der Sensor an dem zweiten Drehelement montiert ist.

3. Vorrichtung zum Messen nach Anspruch 1, bei der die Erzeugungsmittel eine Spule umfassen, die direkt an dem ersten Drehelement positioniert ist, um den Sensor zu beeinflussen.

4. Vorrichtung zum Messen nach Anspruch 1, bei der der Rotor des Resolvers einen Erregerstrom empfängt, der von den Verarbeitungsmitteln über zweite Übertragungsmittel übertragen wird.

5. Vorrichtung zum Messen nach Anspruch 1, bei der die Erzeugungsmittel Erregungsmittel und einen Hilfsrotor (330) umfassen.

6. Vorrichtung zum Messen nach Anspruch 5, bei der der Sensor an dem Hilfsrotor montiert ist.

7. Vorrichtung zum Messen nach einem der vorhergehenden Ansprüche, bei der die ersten Übertragungsmittel oder die zweiten Übertragungsmittel einen Drehtransformator umfassen.

8. Drehantriebssystem zum Drehantrieb eines Luftfahrzeugrades, wobei das System einen elektrischen Antriebsmotor (303) umfasst, der dazu bestimmt ist, das Rad in Drehung anzutreiben, Steuermittel, die einen Wechselrichter umfassen, um den elektrischen Antriebsmotor zu steuern, sowie eine Messvorrichtung nach einem der vorhergehenden Ansprüche, die dazu bestimmt ist, eine relative Drehgeschwindigkeit und/oder eine relative Winkelposition zwischen einer Abtriebswelle des Motors und dem Rad zu messen.

**Claims**

1. Device for measuring a relative rotation speed and/or a relative angular position between a first rotating element (102) and a second rotating element (103) mounted to rotate relative to a static part, the device including:

   - means for generating a magnetic field rotating at a magnetic rotation speed representing a rotation speed of the first rotating element;
   - a sensor (105) mounted to rotate at the rotation speed of the first rotating element or at a rotation speed of the second rotating element and sensitive to the rotating magnetic field, the sensor being adapted to produce from the rotating magnetic field a measurement signal representing the relative rotation speed and/or the relative angular position;
   - processing means (111) positioned on the static part and intended to acquire the measurement signal;
   - first transmission means adapted to transmit the measurement signal to the processing means from the sensor, the first transmission means comprising two rotating transformers (109, 110), the generation means comprising a rotor (112) comprising a single winding mounted on the first rotating element, the sensor comprising a stator (120, 121) comprising two windings mounted on the second rotating element, the rotor and the stator forming a resolver (122),

   the magnetic field generated inducing out-of-phase induced electric currents in the windings of the stator, the out-of-phase induced electric currents representing the relative speed between the first rotating element (102) and the second rotating element (103), the out-of-phase induced electric currents themselves inducing measurement electric currents which are acquired by the processing means via the two rotating transformers.

2. Measuring device according to Claim 1, wherein the sensor is mounted on the second rotating element.

3. Measuring device according to Claim 1, wherein the generation means include a winding positioned directly on the first rotating element to influence the sensor.

4. Measuring device according to Claim 1, wherein the rotor of the resolver receives an excitation current transmitted by the processing means via second transmission means.

5. Measuring device according to Claim 1, wherein the generation means include excitation means and an auxiliary rotor (330).

6. Measuring device according to Claim 5, wherein the sensor is mounted on the auxiliary rotor.

7. Measuring device according to any one of the preceding claims, wherein the first transmission means or the second transmission means include a rotating transformer.

8. System for driving an aircraft wheel in rotation, the system including an electric drive motor (303) intended to drive the wheel in rotation, control means including an inverter for controlling the electric drive motor and a measuring device according to any one of the preceding claims intended to measure a relative rotation speed and/or a relative angular position between an output shaft of the motor and the wheel.

Fig. 1

Fig. 2

Fig. 3

Fig. 4

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 1167072 B

- US 4928046 A